# EUROPÄISCHE PATENTSCHRIFT

(11) **EP 4 442 437 B1**
(45) Veröffentlichungstag und Bekanntmachung des Hinweises auf die Patenterteilung: **04.11.2026**
(21) Anmeldenummer: 24168004.0
(22) Anmeldetag: 02.04.2024
(51) Int. Cl.: B29C 65/18, B65B 51/14, B29C 65/30, B65B 11/52

(54) **SIEGELSTATION FÜR EINE VERPACKUNGSMASCHINE UND SIEGELVERFAHREN**
SEALING STATION FOR A PACKAGING MACHINE AND SEALING METHOD
POSTE DE SCELLAGE POUR UNE MACHINE D'EMBALLAGE ET PROCÉDÉ DE SCELLAGE

(30) Priorität: 05.04.2023 DE 102023108719
(43) Veröffentlichungstag der Anmeldung: 09.10.2024
(73) Patentinhaber: Hesser Packaging GmbH, 71332 Waiblingen (DE)
(72) Erfinder: Bischoff, Bernd Konrad, 71332 Waiblingen (DE); Klauser, Matthias, 71254 Ditzingen (DE); Murillo Castellon, Svenja, 70195 Stuttgart (DE); Stotz, Heike, 70186 Stuttgart (DE)
(74) Vertreter: Novagraaf Group

(56) Entgegenhaltungen:
- DE-U- 1 747 781
- US-A- 2 437 057
- US-A- 3 760 563

## Beschreibung

Die vorliegende Erfindung betrifft eine Siegelstation für eine Verpackungsmaschine und ein Siegelverfahren. Mit der Verpackungsmaschine ist insbesondere eine Verpackung für ein Packgut herstellbar. Durch die Siegelstation ist zumindest eine Aufnahmekavität in einem Verpackungselement der Verpackung, die zur Aufnahme des Packguts dient, siegelbar bzw. verschließbar.

Bei dem Packgut kann es sich beispielsweise um Pharmazeutika, zum Beispiel in Form zumindest einer Tablette, handeln. Das Packgut kann insbesondere einzeln aus der Verpackung entnehmbar sein. Dabei kann es vorteilhaft sein, wenn weitere Portionen des Packguts in der Verpackung verbleiben und durch die Verpackung auch nach der Entnahme einzelner Portionen des Packguts weiterhin durch die Verpackung geschützt sind. Solche Verpackungen werden regelmäßig auch als "Blister" oder "Blisterverpackung" bezeichnet. Weiterhin kann es sich bei der Verpackung um eine sogenannte Clamshell-Verpackung handeln.

Bekannte Verpackungen können beispielsweise eine Kunststoffstruktur aufweisen, deren Aufnahmekavitäten für das Packgut durch Umformen ausgebildet sind. Die Aufnahmekavitäten können durch die Siegelstation mit einer, beispielsweise metallischen, Folie verschlossen werden, durch die das Packgut zur Entnahme aus den Aufnahmekavitäten hindurchdrückbar ist.

Aus der DE 17 47 781 U ist eine Vorrichtung mit einer Nut und einer Prägegeometrie zum Versiegeln von Kunststoffbehältern mittels Heißsiegelmethode bekannt. Aus der US 2,437,057 A ist eine Vorrichtung zum Heißsiegeln von thermoplastischen Kunststoffbögen bekannt. Aus der US 3,760,563 A ist zudem eine Vorrichtung bekannt, mittels welcher ein metallischer Behälter mit einem metallischen, flachen Deckel versiegelbar ist.

Alternativ können Verpackungen zumindest teilweise auch aus einem faserbasierten Packmaterial, wie zum Beispiel Papier oder Pappe, gebildet werden, um beispielsweise ein Recyceln der Verpackung zu erleichtern.

Nachteilig an dem faserbasierten Packmaterial ist jedoch dessen geringere Umformbarkeit, insbesondere beim Tiefziehen der Aufnahmekavitäten. Beispielsweise kann es beim Umformen des faserbasierten Packmaterials bzw. beim Tiefziehen der Aufnahmekavitäten zur Faltenbildung kommen. Beim Siegeln der Aufnahmekavitäten können die Falten in einem Siegelbereich bzw. Verbindungsbereich des faserbasierten Packmaterials Kanäle bilden, die einen Gasaustausch zwischen den Aufnahmekavitäten und einer Umgebungsatmosphäre der Verpackung ermöglichen. Eine gasdichte Verpackung von Packgütern, wie zum Beispiel Pharmazeutika und/oder Lebensmitteln, ist jedoch häufig erforderlich.

Hiervon ausgehend ist es Aufgabe der vorliegenden Erfindung, die mit Bezug auf den Stand der Technik geschilderten Probleme wenigstens teilweise zu lösen und insbesondere eine Siegelstation für eine Verpackungsmaschine anzugeben, die ein gasdichtes Siegeln von faserbasierten Packstoffen ermöglicht. Zudem soll auch ein Siegelverfahren angegeben werden, das ein gasdichtes Siegeln von faserbasierten Packstoffen ermöglicht.

Diese Aufgaben werden gelöst mit einer Siegelstation und einem Siegelverfahren gemäß den Merkmalen der unabhängigen Ansprüche. Weitere vorteilhafte Ausgestaltungen sind in den abhängig formulierten Ansprüchen sowie in der Beschreibung und insbesondere auch in der Figurenbeschreibung angegeben. Es ist darauf hinzuweisen, dass der Fachmann einzelne Merkmale in technologisch sinnvoller Weise miteinander kombinieren kann und damit zu weiteren Ausgestaltungen der Erfindung gelangt.

Hierzu trägt eine Siegelstation für eine Verpackungsmaschine bei, die zumindest Folgendes aufweist:
- ein erstes Siegelelement mit einer ersten Siegelfläche, wobei die erste Siegelfläche zumindest eine Nut aufweist; und
- ein zweites Siegelelement mit einer zweiten Siegelfläche, wobei die zweite Siegelfläche zumindest eine Prägegeometrie aufweist, die beim Siegeln eines ersten Verpackungselements mit einem zweiten Verpackungselement zumindest teilweise in die zumindest eine Nut eingreift, sodass das erste Verpackungselement und das zweite Verpackungselement zur zumindest teilweisen Verhinderung einer Kanalbildung in einem Verbindungsbereich umgeformt werden.

Die Verpackungsmaschine dient insbesondere der Herstellung einer Verpackung für ein Packgut. Die Verpackungsmaschine kann eine Mehrzahl von Bearbeitungsstationen aufweisen. Beispielsweise kann die Verpackungsmaschine neben der Siegelstation zumindest eine Umformstation umfassen. Die Umformstation kann zum Beispiel als Tiefziehpresse ausgebildet sein oder eine Tiefziehpresse umfassen. Insbesondere kann die Verpackungsmaschine dazu eingerichtet sein, ein beispielsweise von einer Rolle (ggf. als Endlosmaterial) bereitgestelltes, faserbasiertes Packmaterial zu verarbeiten, um daraus die Verpackung herzustellen. Vorzugsweise kann die Verpackungsmaschine dazu eingerichtet sein, die Verpackung bei ihrer Herstellung mit dem Packgut zu befüllen.

Die Verpackung kann beispielsweise nach Art eines Blisters, einer Blisterverpackung, einer Mehrfachkavitätenverpackung und/oder einer Clamshell-Verpackung ausgebildet sein. Bei dem Packgut kann es sich beispielsweise um ein Pharmazeutikum oder ein Lebensmittel handeln. Das Packgut kann, beispielsweise in Form einer Tablette und/oder zumindest einer Kapsel, portioniert sein.

Der zumindest einen Umformstation kann ein erstes Verpackungselement bereitgestellt bzw. zugeführt werden. Das Bereitstellen kann beispielsweise von einer Packmaterialquelle, zum Beispiel der Rolle, erfolgen. Das Bereitstellen kann beispielsweise durch eine (insbesondere automatische) Fördereinrichtung erfolgen.

Das erste Verpackungselement besteht zumindest teilweise oder vollständig aus einem faserbasierten Packmaterial. Das erste Verpackungselement kann (vor dem Umformen) insbesondere flach und/oder eben ausgebildet sein. Beispielsweise kann das faserbasierte Packmaterial eine Materialstärke bzw. Dicke von 0,1 mm bis 2 mm aufweisen. Das faserbasierte Packmaterial des ersten Verpackungselements kann eine Beschichtung aus zumindest einem weiteren Material aufweisen und/oder mit zumindest einem weiteren Material getränkt sein. Die Beschichtung kann beispielsweise auf einer ersten Innenseite und/oder einer ersten Außenseite des ersten Verpackungselements ausgebildet sein. Das faserbasierte Packmaterial des ersten Verpackungselements (und auch das zweite Verpackungselement) kann insbesondere auf der (zu zumindest einer Aufnahmekavität der Verpackung hin ausgerichteten) ersten Innenfläche eine Barriereschicht aufweisen.

Die Barriereschicht kann beispielsweise eine polymere Beschichtung, eine Lackierung, eine Lasur oder eine ähnliche Behandlung der Oberfläche des faserbasierten Packmaterials umfassen, welche auf der ersten Innenfläche des ersten Verpackungselements aufgebracht ist. Die Barriereschicht kann die erste Innenfläche des ersten Verpackungselements bilden. Die Barriereschicht kann über die gesamte erste Innenfläche des ersten Verpackungselements ausgebildet sein oder die gesamte erste Innenfläche des ersten Verpackungselements bilden. Die Barriereschicht kann dazu ausgebildet sein eine Funktion beim Siegeln der Verpackungselemente zu übernehmen. Barriereschichten des ersten Verpackungselementes und des zweiten Verpackungselementes können beispielsweise beim Siegeln in der Siegelstation miteinander eine Verbindung ausbilden, die Teil der Siegelung bildet. Beispielsweise können Barriereschichten der Verpackungselemente miteinander verschweißt werden.

Das faserbasierte Packmaterial ist insbesondere ein Papier oder ein Karton. Je nach Stärke/Dicke und Aufbau spricht man auch von einem Verpackungskarton oder einem Verpackungspapier. Der Begriff "Karton" bezeichnet einen flächigen Werkstoff, der im Wesentlichen aus Fasern (insbesondere Fasern aus pflanzlicher Herkunft) besteht. Insbesondere handelt es sich um einen Werkstoff aus Zellulosefasern. Ein solcher Werkstoff wird bevorzugt durch Entwässerung einer Fasersuspension gebildet. Ein "Karton" weist gegenüber einem Papier insbesondere eine erhöhte mechanische Festigkeit auf. Bevorzugt hat der "Karton" ein Mindestgewicht pro Quadratmeter Kartonfläche von 130 g/m² [Gramm/Quadratmeter]. Materialien mit einem geringeren Gewicht pro Fläche werden häufig als Papier bezeichnet. Ein Karton kann auch ein Verbundwerkstoff aus mehreren Schichten Papier mit einem Gewicht pro Fläche unterhalb von 130 g/m² [Gramm/Quadratmeter] sein. Gegebenenfalls kann ein solcher Verbundwerkstoff auch Luft enthalten und beispielsweise mit einer gewellten Papierschicht ausgeführt sein. Ein solcher flächiger Werkstoff kann auch aus einem Faserverbund gebildet sein oder einen Faserverbund umfassen, welcher nicht kompakt ist, sondern offene oder geschlossene Poren aus Luft umschließt. Faserbasierte Packmaterialien haben gegenüber Verpackungen aus Kunststoffmaterialien regelmäßig Vorteile hinsichtlich der Umweltverträglichkeit und der Möglichkeiten des Recyclings.

Das erste Verpackungselement kann zumindest eine erste Formung aufweisen. Die zumindest eine erste Formung kann insbesondere durch die zumindest eine Umformstation erzeugt werden. Die zumindest eine erste Formung kann zumindest teilweise durch eine (plastische) Verformung des zumindest einen ersten Verpackungselements erzeugt werden. Das Erzeugen der zumindest einen ersten Formung kann beispielsweise durch Tiefziehen, Prägen, Pressformen, Freiformen, Drücken, Weiten und/oder Hydroformen erfolgen.

Zum Erzeugen der zumindest einen ersten Formung kann die zumindest eine Umformstation eine Matrize mit zumindest einer Formkavität aufweisen. Bei der Matrize handelt es sich insbesondere um eine Metallform. Die Matrize kann ein Negativ einer Form bzw. einer Außenform des (herzustellenden und/oder umgeformten) ersten Verpackungselements zumindest teilweise bilden. Die zumindest eine Formkavität kann nach Art einer Öffnung, Ziehöffnung und/oder Mulde ausgebildet sein. Die zumindest eine Formkavität kann in einer Oberseite der Matrize ausgebildet sein. Die Oberseite der Matrize kann eben ausgebildet sein.

Die Matrize kann eine Mehrzahl oder eine Vielzahl von Formkavitäten aufweisen. Die einzelnen Formkavitäten können identisch ausgebildet sein. Die Formkavitäten können in Reihen und/oder Zeilen zueinander angeordnet sein. Beispielsweise können die Formkavitäten nach Art einer Matrix und/oder schachbrettartig angeordnet sein. Die Formkavitäten können, insbesondere parallel zu der Oberseite der Matrize, voneinander beabstandet sein. Der Abstand kann beispielsweise 1 mm bis 20 mm betragen.

Die zumindest eine Umformstation kann zumindest einen Stempel umfassen, mit dem das erste Verpackungselement zur Ausbildung der zumindest einen ersten Formung, insbesondere teilweise, in die zumindest eine Formkavität ziehbar ist. Die zumindest eine erste Formung ist durch Tiefziehen und/oder durch Ziehen des Verpackungselements in die zumindest eine Formkavität insbesondere durch eine plastische Verformung des ersten Verpackungselements erzeugbar. Die zumindest eine erste Formung kann muschelförmig, schalenförmig oder topfförmig ausbildbar sein. Das erste Verpackungselement kann (insbesondere in Folge der plastischen Verformung) im Bereich der zumindest einen ersten Formung zumindest teilweise eine (erste) Materialstärke aufweisen, die geringer ist als eine (zweite) Materialstärke des zumindest einen ersten Verpackungselements außerhalb der zumindest einen ersten Formung. Die zumindest eine Formkavität kann ein Negativ der Form der zumindest einen ersten Formung bilden. Der zumindest eine Stempel kann nach Art einer Patrize, eines Tiefziehstempels oder eines Prägestocks ausgebildet sein. Eine Stempelform des zumindest einen Stempels kann zumindest teilweise an eine Form der zumindest einen Formkavität angepasst sein. Der zumindest eine Stempel kann elektrisch, hydraulisch und/oder pneumatische antreibbar bzw. verstellbar sein. Der zumindest eine Stempel ist insbesondere relativ zu der Matrix verstellbar. Der zumindest eine Stempel kann zu der zumindest einen Formkavität ausgerichtet sein. Die Vorrichtung kann eine Mehrzahl oder eine Vielzahl von Stempeln aufweisen. Die einzelnen Stempel können identisch ausgebildet sein. Die Stempel können in den Reihen und/oder den Zeilen angeordnet sein. Beispielsweise können die Stempel nach Art der Matrix und/oder schachbrettartig angeordnet sein. Eine Anzahl der Stempel kann einer Anzahl der Formkavitäten entsprechen.

Die Umformstation kann zumindest einen Niederhalter umfassen. Der zumindest eine Niederhalter kann zumindest teilweise aus Metall bestehen. Der zumindest eine Niederhalter kann zumindest teilweise nach Art einer Platte oder eines Rings ausgebildet sein. Der zumindest eine Niederhalter weist insbesondere zumindest eine Stempelöffnung für den zumindest einen Stempel auf, durch die der zumindest eine Stempel zumindest teilweise in die zumindest eine Formkavität der Matrize verstellbar ist. Der zumindest eine Niederhalter kann eine Niederhaltefläche aufweisen. Die Niederhaltefläche ist insbesondere eben ausgebildet. Der zumindest eine Niederhalter bzw. die Niederhaltefläche des zumindest einen Niederhalters begrenzen zumindest teilweise einen Spalt, in dem das erste Verpackungselement anordenbar ist. Der Spalt erstreckt sich insbesondere um die zumindest eine Formkavität. Der Spalt erstreckt sich insbesondere in einer ebenen Spaltebene. Die Spaltebene verläuft insbesondere parallel zu der Niederhaltefläche des zumindest einen Niederhalters. Der Spalt kann zumindest teilweise zwischen dem zumindest einen Niederhalter und der Matrize ausgebildet sein. Die Umformstation kann einen oberen Niederhalter und einen unteren Niederhalter aufweisen. Der Spalt kann insbesondere zwischen dem oberen Niederhalter und dem unteren Niederhalter und/oder zwischen dem oberen Niederhalter und der Matrize ausgebildet sein.

Der zumindest eine Niederhalter ist insbesondere zwischen einer Niederhalteposition und einer Freigabestellung verstellbar. Der zumindest eine Niederhalter kann zwischen der Niederhalteposition und der Freigabestellung elektrisch, hydraulisch oder pneumatisch verstellbar sein. Der zumindest eine Niederhalter ist insbesondere relativ zu der Matrize und/oder unabhängig von dem zumindest einen Stempel verstellbar. Der obere Niederhalter und der untere Niederhalter können relativ zu der Matrize und/oder unabhängig von dem zumindest einen Stempel verstellbar sein. Alternativ kann der untere Niederhalter an der Matrize befestigt sein. In der Freigabestellung ist das Verpackungselement in dem Spalt anordenbar. Das Anordnen des Verpackungselements in dem Spalt kann beispielsweise durch einen (insbesondere automatischen) Vorschub erfolgen. In der Niederhalteposition des zumindest einen Niederhalters hält der zumindest eine Niederhalter das Verpackungselement in dem Spalt nieder, sodass das Verpackungselement beim Ausbilden der zumindest einen Formung durch den zumindest einen Stempel in Richtung der zumindest einen Formkavität rutschen bzw. fließen kann. In der Niederhalteposition des zumindest einen Niederhalters kann der Spalt (insbesondere orthogonal zu der Spaltebene) eine Spaltbreite aufweisen, die insbesondere (im Wesentlichen) einer Materialstärke bzw. Dicke des Verpackungselements entsprechen kann. Die Spaltbreite kann beispielsweise 0,1 mm bis 2 mm betragen.

Das zumindest eine erste Verpackungselement kann zumindest einen ersten Bereich aufweisen, wobei der zumindest eine erste Bereich die zumindest eine erste Formung einschließen bzw. umgeben kann. Der zumindest eine erste Bereich kann eben ausgebildet sein. Der zumindest eine erste Bereich kann insbesondere eine durchgängige erste Ebene bilden. Die zumindest eine erste Ebene kann insbesondere (nur) durch die zumindest eine erste Formung unterbrochen sein. Bei der zumindest einen ersten Ebene kann es sich um eine erste Grundebene des zumindest einen ersten Verpackungselements handeln. Das zumindest eine erste Verpackungselement bzw. die erste Grundebene kann (im Wesentlichen) quadratisch oder rechteckig ausgebildet sein. Die zumindest eine erste Formung erhebt sich aus dem ersten Verpackungselement bzw. der ersten Grundebene des ersten Verpackungselements.

Die zumindest eine erste Formung wird mit einer ersten Öffnung ausgebildet. Die erste Öffnung bzw. der erste Öffnungsquerschnitt wird insbesondere in der ersten Grundebene des ersten Verpackungselements ausgebildet.

Die zumindest eine erste Formung kann beispielsweise mit einer ersten Tiefe von 1 mm [Millimeter] bis 50 mm, bevorzugt 5 mm bis 20 mm, ausgebildet werden. Die erste Öffnung kann mit einer ersten Breite von 5 mm bis 200 mm, bevorzugt 5 mm bis 50 mm, und/oder einer ersten Länge von 5 mm bis 200 mm, bevorzugt 5 mm bis 50 mm, ausgebildet werden. Die erste Tiefe kann sich insbesondere orthogonal zu der ersten Grundebene von der ersten Öffnung bis zu dem ersten Boden bemessen. Die erste Breite kann sich insbesondere parallel zu der ersten Grundebene und/oder orthogonal zu der ersten Länge bemessen. Die erste Länge kann sich insbesondere parallel zu der ersten Grundebene und/oder orthogonal zu der ersten Breite bemessen.

Durch die Siegelstation ist das erste Verpackungselement mit einem zweiten Verpackungselement siegelbar bzw. verbindbar, sodass die zumindest eine erste Formung mindestens teilweise zumindest eine Aufnahmekavität für das Packgut bildet.

Das zweite Verpackungselement kann entsprechend dem ersten Verpackungselement und/oder identisch zu dem ersten Verpackungselement ausgebildet sein bzw. ausgebildet werden. Durch die zumindest eine Umformstation kann (insbesondere entsprechend der zumindest einen ersten Formung) zumindest eine zweite Formung in dem zweiten Verpackungselement erzeugt werden.

Das zumindest eine zweite Verpackungselement kann zumindest teilweise oder vollständig aus dem faserbasierten Packmaterial bestehen. Das zumindest eine erste Verpackungselement und das zumindest eine zweite Verpackungselement können zumindest teilweise oder vollständig aus dem gleichen faserbasierten Packmaterial bestehen. Das zumindest eine erste Verpackungselement und das zumindest eine zweite Verpackungselement können zumindest teilweise aus verschiedenen faserbasierten Packmaterialien bestehen. Dies kann beispielsweise vorteilhaft sein, wenn nur eines der faserbasierten Packmaterialien bzw. nur eines der beiden Verpackungselemente bedruckt ist bzw. bedruckt werden soll. Dann kann beispielsweise das zumindest eine erste Verpackungselement aus einem zum Bedrucken geeigneten faserbasierten Packmaterial hergestellt sein, während das zumindest eine zweite Verpackungselement aus einem (bspw. kostengünstigeren) faserbasierten Packmaterial hergestellt sein kann, welches für das Bedrucken weniger geeignet ist. Ein anderer Anwendungsfall kann beispielsweise darin liegen, eines der beiden Verpackungselemente aus einem faserbasierten Packmaterial zu fertigen, welches ein leichteres Öffnen der zumindest einen Aufnahmekavität ermöglicht.

Das zumindest eine erste Verpackungselement bzw. die erste Grundebene des zumindest einen ersten Verpackungselements und das zumindest eine zweite Verpackungselement bzw. eine zweite Grundebene des zumindest einen zweiten Verpackungselements können (im Wesentlichen) gleichgroß ausgebildet sein.

Die zumindest eine erste Formung und/oder die zumindest eine zweite Formung sind bevorzugt als (lokal begrenzte) Auswölbungen ausgebildet. Die zumindest eine erste Formung und/oder die zumindest eine zweite Formung können jeweils zumindest eine Wandung aufweisen, die sich (insbesondere in der Grundebene) an einen umlaufenden Randbereich anschließen. Die zumindest eine erste Formung und/oder die zumindest eine zweite Formung können jeweils einen Boden aufweisen, der die tiefste Stelle der Auswölbung bilden kann. Bevorzugt gehen die durchgängige erste Ebene bzw. die erste Grundebene des zumindest einen ersten Verpackungselements und/oder die durchgängige zweite Ebene bzw. die zweite Grundebene des zumindest einen zweiten Verpackungselements in die Wandungen der Auswölbungen/Formungen über. Der Übergang von den Wandungen der Auswölbungen/Formungen zu dem Boden kann mit Krümmungsradien des faserbasierten Packmaterials ausgeführt werden. Bevorzugt sind solche Krümmungsradien nicht kleiner als ein Grenzwert, der beispielsweise größer als 0,5 mm [Millimeter] oder größer als 2 mm [Millimeter] sein kann. Wandungen der Formungen bilden bevorzugt (relativ) flache erste Flanken. Die Wandungen können mit einem (relativ kleinen), insbesondere maximalen, ersten Wandungswinkel zu der ersten Grundebene des zumindest einen ersten Verpackungselements und/oder zu der zweiten Grundebene des zumindest einen zweiten Verpackungselements bzw. zu der Verbindungsebene ausgebildet werden. Der erste Wandungswinkel kann beispielsweise weniger als 75° [Winkelgrad], weniger als 60° [Winkelgrad] oder sogar weniger als 45° [Winkelgrad] betragen. Die Möglichkeiten mit Umformverfahren steilere Flanken als die hier beschriebenen Flanken in ein Verpackungsmaterial einzubringen sind bei faserbasierten Packmaterialien eingeschränkt.

Das zumindest eine erste Verpackungselement und das zumindest eine zweite Verpackungselement können durch die Siegelstation in einer Verbindungsebene miteinander verbunden werden. Die Verbindungsebene ist bevorzugt eben. Die erste Grundebene des zumindest einen ersten Verpackungselements und die zweite Grundebene des zumindest einen zweiten Verpackungselements können in der Verbindungsebene aneinander anliegen. Das erste Verpackungselement und das zweite Verpackungselement sind durch die Siegelstation insbesondere derart siegelbar bzw. verfügbar, dass die zumindest eine erste Formung und die zumindest eine zweite Formung ausgehend von der Verbindungsebene in entgegengesetzte Richtungen ausgebildet bzw. gewölbt sind. In der Verbindungsebene kann zumindest ein Verbindungsbereich ausgebildet werden, in dem das erste Verpackungselement und das zweite Verpackungselement miteinander verbunden bzw. aneinander befestigt sind. Insbesondere können in dem zumindest einen Verbindungsbereich die erste Innenfläche des zumindest einen ersten Verpackungselements und eine zweite Innenfläche des zumindest einen zweiten Verpackungselements miteinander verbunden bzw. aneinander befestigt werden. Der zumindest eine Verbindungsbereich kann beispielsweise durch ein Haftmittel oder einen Klebstoff ausgebildet werden. Bevorzugt ist allerdings, dass der zumindest eine Verbindungsbereich ohne zusätzliche Materialien ausgebildet wird. Beispielsweise kann der zumindest eine Verbindungsbereich durch eine stoffschlüssige Verbindung zwischen dem faserbasierten Packmaterial des zumindest einen ersten Verpackungselements und des zumindest einen zweiten Verpackungselements ausgebildet werden. Der zumindest eine Verbindungsbereich kann durch eine Siegelung des zumindest einen ersten Verpackungselements und/oder des zumindest einen zweiten Verpackungselements ausgebildet werden.

Zum Siegeln bzw. Fügen des ersten Verpackungselements und des zweiten Verpackungselements umfasst die Siegelstation ein erstes Siegelelement und ein zweites Siegelelement. Bei dem ersten Siegelelement kann es sich insbesondere um ein Siegelunterteil und/oder bei dem zweiten Siegelelement um ein Siegeloberteil handeln. Das erste Siegelelement und/oder das zweite Siegelelement können zumindest teilweise plattenförmig, zumindest teilweise ringförmig und/oder aus Metall ausgebildet sein. Mit dem Begriff "ringförmig" ist hier insbesondere gemeint, dass die Siegelelemente eine umlaufende, geschlossene Form bilden. Die ringförmige Form kann kreisrund, rund, oval, eckig (ggf. mit abgerundeten Ecken) oder auch anders geformt sein.

Das erste Siegelelement und das zweite Siegelelement können relativ zueinander zwischen einer Offenstellung und einer Siegelstellung bewegbar sein. Die Bewegung des ersten Fügewerkzeugs und/oder des zweiten Fügewerkzeugs kann beispielsweise elektrisch, hydraulisch und/oder pneumatisch erfolgen. In der Offenstellung sind das erste Siegelelement und das zweite Siegelelement insbesondere zumindest teilweise voneinander beabstandet, sodass das erste Verpackungselement und das zweite Verpackungselement zwischen dem ersten Siegelelement und dem zweiten Siegelelement anordenbar sind. In der Siegelstellung pressen eine erste Siegelfläche des ersten Siegelelements und eine zweite Siegelfläche des zweiten Siegelelements das erste Verpackungselement und das zweite Verpackungselement, insbesondere in dem Verbindungsbereich bzw. Siegelbereich, aufeinander. Die erste Siegelfläche und die zweite Siegelfläche sind insbesondere zum Siegeln bzw. Verbinden des ersten Verpackungselements und des zweiten Verpackungselements vorgesehen und/oder eingerichtet. Das Siegeln bzw. Verbinden kann beispielsweise mittels Feuchtigkeit, Druck und/oder Wärme erfolgen. Die erste Siegelfläche und die zweite Siegelfläche können zumindest teilweise kongruent zueinander, zumindest teilweise parallel zueinander und/oder zumindest teilweise eben ausgebildet sein.

Die erste Siegelfläche des ersten Siegelelements weist zumindest eine Nut und die zweite Siegelfläche zumindest eine Prägegeometrie auf. Die erste Siegelfläche des ersten Siegelelements kann eine einzige Nut und/oder die zweite Siegelfläche eine einzige Prägegeometrie aufweisen. Die Nut kann als längliche Vertiefung in der ersten Siegelfläche ausgebildet sein. Die Nut kann beispielsweise (insbesondere ausgehend von der ersten Siegelfläche und/oder orthogonal zu der ersten Siegelfläche) eine Nuttiefe von 0,1 mm bis 2 mm und/oder (insbesondere parallel zu der ersten Siegelfläche) eine Nutbreite von 0,1 mm bis 2 mm aufweisen. Die Prägegeometrie kann zumindest teilweise kongruent zu der Nut ausgebildet sein und/oder (in der Siegelstellung der Siegelelemente) sich zumindest teilweise oder vollständig entlang der Nut erstrecken. Die Prägegeometrie kann beispielsweise zumindest teilweise als Steg ausgebildet sein und/oder sich entlang der zweiten Siegelfläche erstrecken. Die Prägegeometrie kann zumindest teilweise linienförmig ausgebildet sein und/oder sich linienförmig entlang der zweiten Siegelfläche erstrecken. Die Prägegeometrie kann sich aus der zweiten Siegelfläche des zweiten Siegelelements erheben und/oder sich in Richtung der Nut erstrecken. Die Prägegeometrie kann (insbesondere orthogonal zu der zweiten Siegelfläche) eine Höhe von beispielsweise 0,1 mm bis 2 mm und/oder (insbesondere parallel zu der zweiten Siegelfläche) eine Breite von 0,1 mm bis 2 mm aufweisen. Die Prägegeometrie kann eine Breite aufweisen, die geringer ist als die Nutbreite der Nut, und/oder eine Höhe, die geringer ist als die Nuttiefe der Nut.

Die zumindest eine Prägegeometrie greift beim Siegeln der Verpackungselemente und/oder in der Siegelstellung der Siegelelemente zumindest teilweise in die zumindest eine Nut ein. Hierdurch werden die Verpackungselemente beim Siegeln in der zumindest einen Nut (elastisch und/oder plastisch) umgeformt, wodurch die Bildung von Kanälen in dem zumindest einen Verbindungsbereich zwischen den Verpackungselementen zumindest teilweise verhindert wird. Zumindest teilweise verhindert kann insbesondere bedeuten, dass im Verbindungsbereich bzw. im Siegelbereich gebildete Kanäle zumindest teilweise geschlossen bzw. unterbrochen werden, sodass durch die Kanäle kein Gasaustausch zwischen der zumindest einen Aufnahmekavität und einer Umgebungsatmosphäre der Verpackung erfolgen kann. Die zumindest eine Nut kann in der ersten Siegelfläche des ersten Siegelelements und/oder die Prägegeometrie in der zweiten Siegelfläche des zweiten Siegelelements insbesondere derart ausgebildet sein bzw. werden, dass diese beim Siegeln im Bereich von Falten des ersten Verpackungselements und/oder zweiten Verpackungselements mit einem Winkel von 80° bis 100°, bevorzugt (im Wesentlichen) 90°, zu den Falten verlaufen. Hierdurch ist die Kanalbildung besonders effizient bzw. prozesssicher verhinderbar. Die Falten können insbesondere beim Erzeugen der zumindest einen ersten Formung und/oder der zumindest einen zweiten Formung entstanden sein.

Der zumindest eine Verbindungsbereich kann peelfähig ausgebildet werden. Eine peelfähige Verbindung ist dicht versiegelt, aber vergleichsweise leicht lösbar bzw. abziehbar. Der zumindest eine Verbindungsbereich kann bevorzugt zerstörungsfrei (das heißt ohne Zerstörung des zumindest einen ersten Verpackungselements und/oder des zumindest einen zweiten Verpackungselements) lösbar sein. Der zumindest eine Verbindungsbereich kann sich in der Verbindungsebene um die zumindest eine Aufnahmekavität erstrecken. Insbesondere kann sich in der Verbindungsebene um jede Aufnahmekavität ein Verbindungsbereich, insbesondere ringförmig, erstrecken. Die Verbindungsbereiche können voneinander beabstandet sein. Zur Ausbildung des zumindest einen Verbindungsbereichs kann auf dem zumindest einen ersten Verpackungselement und/der dem zumindest einen zweiten Verpackungselements (vorab) ein Fügemedium, eine Siegelschicht und/oder Lack appliziert werden.

Die zumindest eine Aufnahmekavität für das Packgut wird zumindest teilweise durch die zumindest eine erste Formung des ersten Verpackungselements und/oder die zumindest eine zweite Formung des zumindest einen zweiten Verpackungselements gebildet. In der zumindest einen Aufnahmekavität ist das Packgut insbesondere vollständig von dem zumindest einen ersten Verpackungselement und dem zumindest einen zweiten Verpackungselement umgeben. Die zumindest eine Aufnahmekavität kann insbesondere fluiddicht, gasdicht und/oder luftdicht ausgebildet sein.

Das zumindest eine erste Verpackungselement und das zumindest eine zweite Verpackungselement werden insbesondere derart miteinander verbunden, dass (jeweils) eine erste Formung mit (jeweils) einer zweiten Formung eine (einzige) Aufnahmekavität bilden. Beispielsweise kann jede erste Formung mit (jeweils) einer zweiten Formung eine (einzige) Aufnahmekavität bilden. Die zumindest eine erste Formung und die zumindest eine zweite Formung können sich zumindest teilweise oder vollständig überlappen, sodass diese die zumindest eine Aufnahmekavität bilden. Die zumindest eine erste Formung und/oder die zumindest eine zweite Formung können miteinander korrespondieren. Unter "Korrespondieren" kann verstanden werden, dass jeweils genau eine erste Formung des zumindest einen ersten Verpackungselements genau einer zweiten Formung des zumindest einen zweiten Verpackungselements zugeordnet ist. Jede erste Formung des zumindest einen ersten Verpackungselements kann eine korrespondierende zweite Formung des zumindest einen zweiten Verpackungselements aufweisen, durch die die zumindest eine Aufnahmekavität gebildet ist. Eine erste Anzahl der zumindest einen ersten Formung kann einer zweiten Anzahl der zumindest einen zweiten Formung entsprechen.

Es kann vorgesehen sein, dass (nur) das zumindest eine erste Verpackungselement zumindest eine erste Formung und das zumindest eine zweite Verpackungselement keine zweite Formung aufweist.

Die Verpackung kann eine Mehrzahl oder Vielzahl von Aufnahmekavitäten aufweisen. Die Aufnahmekavitäten können in einer Mehrzahl von Reihen und/oder Spalten angeordnet sein. Die Aufnahmekavitäten können nach Art einer Matrix und/oder schachbrettartig angeordnet sein. Mit der Matrix bzw. durch die schachbrettartige Anordnung ist bevorzugt eine gleichmäßige Anordnung von Reihen und Spalten von Aufnahmekavitäten bzw. Formungen an der Verpackung gemeint. Eine solche Anordnung ermöglicht es einem Benutzer der Verpackung insbesondere ohne weiteres einen Überblick darüber zu erhalten, wie viele Packgüter (Tabletten, Medikamente etc.) bereits aus der Verpackung entnommen wurden. Außerdem ist eine Anordnung von Aufnahmekavitäten/Formungen als Matrix und/oder schachbrettartig platzsparend und/oder materialsparend. Das erste Verpackungselement kann eine Mehrzahl erster Formungen zur zumindest teilweisen Ausbildung einer Mehrzahl von Aufnahmekavitäten aufweisen. Das zweite Verpackungselement kann eine Mehrzahl zweiter Formungen zur zumindest teilweisen Ausbildung einer Mehrzahl von Aufnahmekavitäten aufweisen.

Das erste Siegelelement und/oder das zweite Siegelelement können zumindest teilweise beheizbar sein. Insbesondere können die erste Siegelfläche des ersten Siegelelements und/oder die zweite Siegelfläche des zweiten Siegelelements beheizbar sein. Das erste Siegelelement, das zweite Siegelelement, die erste Siegelfläche und/oder die zweite Siegelfläche können beispielsweise auf eine Temperatur von 200 °C [Celsius] bis 300 °C erhitzbar sein. Das erste Siegelelement und/oder das zweite Siegelelement können eine, insbesondere elektrische, Heizung aufweisen.

Die zumindest eine erste Nut kann sich zumindest teilweise um eine erste Aufnahme des ersten Siegelelements für eine erste Formung des ersten Verpackungselements erstrecken. Beim Siegeln des ersten Verpackungselements mit dem zweiten Verpackungselement kann sich die zumindest eine erste Formung zumindest teilweise in die erste Aufnahme erstrecken. Hierdurch ist ein ungewolltes Verformen der zumindest einen ersten Formung verhinderbar.

Die zumindest eine Nut bildet bevorzugt eine (um die erste Aufnahme herum) umlaufende geschlossene Kontur aus.

Die zumindest eine Nut kann ringförmig ausgebildet sein.

Die zumindest eine Prägegeometrie erstreckt sich zumindest teilweise um eine zweite Aufnahme des zweiten Siegelelements für eine zweite Formung des zweiten Verpackungselements. Beim Siegeln des ersten Verpackungselements mit dem zweiten Verpackungselement kann sich die zumindest eine zweite Formung zumindest teilweise in die zweite Aufnahme erstrecken hierdurch ist ein ungewolltes Verformen der zumindest einen zweiten Formung verhinderbar.

Die zumindest eine Prägegeometrie bildet bevorzugt eine (um die erste Aufnahme herum) umlaufende geschlossene Kontur aus.

Die zumindest eine Prägegeometrie kann ringförmig ausgebildet sein.

Die zumindest eine Nut und die zumindest eine Prägegeometrie sind derart ausgebildet, dass beim Siegeln in der zumindest einen Nut zumindest ein Freiraum für das erste Verpackungselement und das zweite Verpackungselement ausgebildet wird. Der Freiraum kann als Spalt zwischen der zumindest einen Nut und der zumindest einen Prägegeometrie ausgebildet sein. Durch den Freiraum kann in der Siegelstellung des ersten Siegelelements und zweiten Siegelelements insbesondere ein Abscheren bzw. Beschädigen des ersten Verpackungselements und/oder zweiten Verpackungselements verhindert werden.

Die erste Aufnahme und die zweite Aufnahme bilden bevorzugt Aufnahmeräume für die Formungen (erste Formung und zweite Formung) der Verpackungselemente.

Die erste Siegelfläche kann an einem ersten ringförmigen Abschnitt des ersten Siegelelements ausgebildet sein. Die erste Siegelfläche kann insbesondere an einer ersten Stirnfläche des ersten ringförmigen Abschnitts ausgebildet sein. Der erste ringförmige Abschnitt kann (insbesondere orthogonal zu der ersten Siegelfläche) eine erste Abschnittslänge von beispielsweise 1 mm bis 10 mm und/oder (insbesondere parallel zu der ersten Siegelfläche) einen ersten Abschnittsdurchmesser von beispielsweise 5 mm bis 200 mm aufweisen.

Die zweite Siegelfläche kann an einem zweiten ringförmigen Abschnitt des zweiten Siegelelements ausgebildet sein. Die zweite Siegelfläche kann insbesondere an einer zweiten Stirnfläche des zweiten ringförmigen Abschnitts ausgebildet sein. Der zweite ringförmige Abschnitt kann (insbesondere orthogonal zu der zweiten Siegelfläche) eine zweite Abschnittslänge von beispielsweise 1 mm bis 10 mm und/oder (insbesondere parallel zu der zweiten Siegelfläche) einen zweiten Abschnittsdurchmesser von beispielsweise 5 mm bis 200 mm aufweisen.

Die Nut und die Prägegeometrie, die jeweils eine geschlossene umlaufende Kontur um eine erste Aufnahme bzw. eine zweite Aufnahme herum ausbilden, können so geformt sein, dass eine Öffnungslasche vorgegeben ist. Im Bereich der Öffnungslasche sind die Nut und die Prägegeometrie bevorzugt derart ausgeformt, dass der Siegelbereich einer Verpackung, die mit der Siegelstation verschlossen wurde, für einen Benutzer gut erreichbar ist. Beispielsweise können die Nut und die Prägegeometrie jeweils eine spitze Ecke vorgeben, mit welchen die Öffnungslasche ausgebildet wird, während die Nut und die Prägegeometrie in anderen Bereichen der Siegelung abgerundet sind. Ein Benutzer, der die mit den Verpackungselementen ausgebildete Verpackung öffnen will, kann hier besonders gut Kraft auf die Siegelung ausüben, um zu beginnen die Verpackungselemente voneinander zu trennen.

Gegebenenfalls können auch eine Querschnittsform der Nut und der Prägegeometrie im Bereich der Öffnungslasche (gegenüber anderen Bereichen der Siegelung) angepasst sein, um die Trennbarkeit, der miteinander gesiegelten Verpackungselemente im Bereich der Öffnungslasche zu vereinfachen. Beispielsweise können die Form bzw. eine Flanke der Querschnittsform der Nut und der Prägegeometrie im Bereich der Öffnungslasche zu einer Außenseite hin abgeflacht sein. Hierdurch kann die Öffnenbarkeit der Verpackung bzw. die Trennbarkeit der Verpackungselemente im Bereich der Öffnungslasche verbessert werden, weil der Benutzer/Anwender hier mit geringem Kraftaufwand die Siegelung lösen kann.

Einem weiteren Aspekt folgend wird auch ein Siegelverfahren vorgeschlagen, das zumindest folgende Schritte aufweist:
a) Bereitstellen eines ersten Verpackungselements, das zumindest teilweise aus einem faserbasierten Packmaterial besteht;
b) Bereitstellen eines zweiten Verpackungselements; und
c) Siegeln des ersten Verpackungselements mit dem zweiten Verpackungselement mit einer hier beschriebenen Siegelstation, sodass das erste Verpackungselement und das zweite Verpackungselement zur Verhinderung einer Kanalbildung in einem Verbindungsbereich umgeformt werden.

Besonders bevorzugt ist das Siegelverfahren, wenn das in Schritt b) bereitgestellte zweite Verpackungselement ebenfalls (so wie auch das erste Verpackungselement) zumindest teilweise aus dem faserbasierten Packmaterial besteht.

In weiteren Ausführungsvarianten des Verfahrens ist es auch möglich, dass das zweite Verpackungselement ganz aus Kunststoff ausgeführt ist und es sich dabei beispielsweise um eine Folie handelt, die mit dem ersten Verpackungselement in der Siegelstation verbunden wird.

Das erste Verpackungselement und das zweite Verpackungselement können mit einem Winkel von 80° bis 100°, bevorzugt (im Wesentlichen) 90°, zu einer ersten Falte des ersten Verpackungselements und/oder einer zweiten Falte des zweiten Verpackungselements umgeformt werden. Hierzu können zumindest eine Nut in der ersten Siegelfläche des ersten Siegelelements und/oder die Prägegeometrie in der zweiten Siegelfläche des zweiten Siegelelements insbesondere derart ausgebildet sein bzw. werden, dass diese beim Siegeln im Bereich von Falten des ersten Verpackungselements und/oder zweiten Verpackungselements mit einem Winkel von 80° bis 100°, bevorzugt (im Wesentlichen) 90°, zu den Falten verlaufen.

Für weitere Einzelheiten zum Siegelverfahren wird vollumfänglich auf die Beschreibung der Siegelstation verwiesen.

Die Erfindung sowie das technische Umfeld der Erfindung werden nachfolgend anhand der Figuren näher erläutert. Die Figuren zeigen ein bevorzugtes Ausführungsbeispiel, auf welche die Erfindung nicht beschränkt ist. Es ist insbesondere darauf hinzuweisen, dass die Figuren und insbesondere die in den Figuren dargestellten Größenverhältnisse nur schematisch sind. Es zeigen beispielhaft und schematisch:
- Fig.1:: eine Verpackungsmaschine mit einer Siegelstation;
- Fig. 2:: ein erstes Siegelelement und ein zweites Siegelelement der Siegelstation in einem Längsschnitt;
- Fig. 3:: das erstes Siegelelement und das zweite Siegelelement der Siegelstation in einer Detailansicht;
- Fig. 4:: schematisch eine Ausführungsvariante einer Siegelstation; und
- Fig. 5a bis 5c:: schematisch Querschnitte durch die Nut und die Prägegeometrie der Siegelstation gemäß Fig. 4

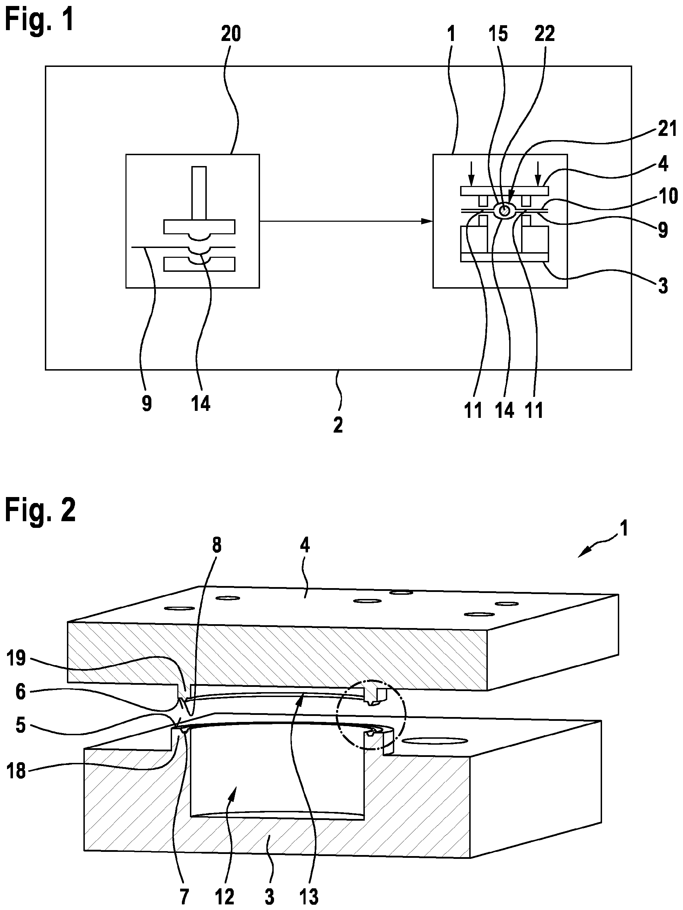

Fig. 1 zeigt eine Verpackungsmaschine 2 zur Herstellung einer hier nicht gezeigten Verpackung. Die Verpackungsmaschine 2 umfasst eine Umformstation 20 und eine Siegelstation 1. Der Umformstation 20 ist von einer hier nicht gezeigten Rolle ein erstes Verpackungselement 9 zuführbar, das zumindest teilweise aus einem faserbasierten Packmaterial besteht. Mit der Umformstation 20 ist in dem ersten Verpackungselement 9 zumindest eine erste Formung 14 formbar. Das erste Verpackungselement 9 mit der zumindest einen ersten Formung 14 ist anschließend der Siegelstation 1 zuführbar. Hierzu kann die Verpackungsmaschine 2 eine, insbesondere automatische, Fördereinrichtung aufweisen. In entsprechender Weise kann durch die Umformstation 20 (oder durch eine weitere Umformstation 20) ein zweites Verpackungselement 10 mit einer zweiten Formung 15 erzeugt und anschließend der Siegelstation 1 zugeführt werden.

Durch die Siegelstation 1 ist das erste Verpackungselement 9 mit dem zweiten Verpackungselement 10 siegelbar bzw. verbindbar, sodass die zumindest eine erste Formung 14 und die zumindest eine zweite Formung 15 zumindest eine Aufnahmekavität 21 für ein Packgut 22 bilden. Hierzu werden das erste Verpackungselement 9 und das zweite Verpackungselement 10 zwischen einem beheizbaren ersten Siegelelement 3 und einem beheizbaren zweiten Siegelelement 4 der Siegelstation 1 angeordnet. Anschließend werden die Siegelelemente 3, 4 aufeinander zu bewegt, bis dass die Verpackungselemente 9, 10 zwischen in Fig. 2 gezeigte Siegelflächen 5, 6 der Siegelelemente 3, 4 eingeklemmt sind. Durch die Siegelflächen 5, 6 ist zwischen den Verpackungselementen 9, 10 ein (hier ringförmiger) Verbindungsbereich 11 erzeugbar, sodass die Verpackungselemente 9, 10 aneinander befestigt sind und die Aufnahmekavität 21 verschlossen ist.

Fig. 2 zeigt das erste Siegelelement 3 und das zweite Siegelelement 4 der Siegelstation 1 in einem Längsschnitt. Das erste Siegelelement 3 umfasst eine erste Aufnahme 12 für die in Fig. 1 gezeigte erste Formung 14 des ersten Verpackungselements 9. Die erste Aufnahme 12 ist von einem ersten ringförmigen Abschnitt 18 des ersten Siegelelements 3 umgeben, an dessen (erstem) längsseitigen Ende die erste Siegelfläche 5 ausgebildet ist. Die erste Siegelfläche 5 weist eine Nut 7 auf, die ringförmig ausgebildet ist. Das zweite Siegelelement 4 umfasst eine zweite Aufnahme 13 für die in Fig. 1 gezeigte zweite Formung 15 des zweiten Verpackungselements 10. Die zweite Aufnahme 13 ist von einem zweiten ringförmigen Abschnitt 19 des zweiten Siegelelements 4 umgeben, an dessen (zweiten) längsseitigen Ende die zweite Siegelfläche 6 ausgebildet ist. Die zweite Siegelfläche 6 weist eine Prägegeometrie 8 auf, die ringförmig ausgebildet ist. Die Prägegeometrie 8 erstreckt sich von der zweiten Siegelfläche 6 in Richtung der ersten Siegelfläche 5 bzw. der Nut 7.

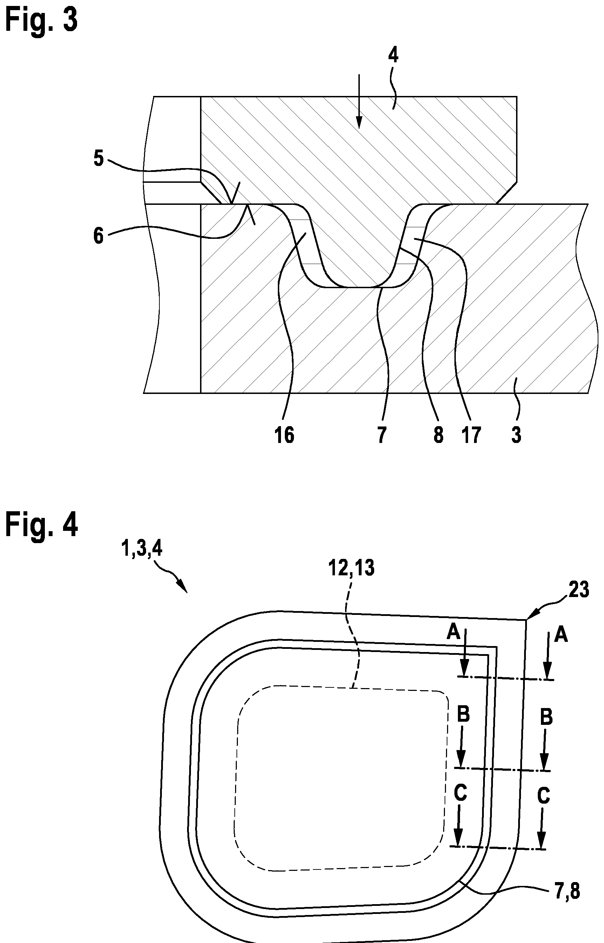

Fig. 3 zeigt einen in Fig. 2 mit einem Kreis markierten Bereich des ersten Siegelelements 3 und des zweiten Siegelelements 4 in einer Detailansicht, nachdem die Siegelelemente 3, 4 aufeinander zu bewegt wurden, bis dass sich die erste Siegelfläche 5 des ersten Siegelelements 3 und die zweite Siegelfläche 6 des zweiten Siegelelements 4 kontaktieren. In einer Siegelstellung der Siegelelemente 3, 4 sind die (hier nicht gezeigten) Verpackungselemente 9, 10 zwischen den Siegelflächen 5, 6 eingeklemmt. In der Siegelstellung greift die Prägegeometrie 8 in die Nut 7 ein, sodass die Verpackungselemente 9, 10 zur Verhinderung einer Kanalbildung in dem in Fig. 1 gezeigten Verbindungsbereich 11 beim Siegeln umgeformt werden. Hierzu drückt die Prägegeometrie 8 die Verpackungselemente 9, 10 in die Nut 7. Die Prägegeometrie 9 und die Nut 7 sind derart ausgebildet, dass beim Siegeln bzw. in der Siegelstellung der Siegelelemente 3, 4 zwischen der Nut 7 und der Prägegeometrie 8 ein Freiraum 16 in Form eines Spalts 17 für die Verpackungselemente 9, 10 ausgebildet ist. Durch den Freiraum 16 ist verhinderbar, dass die Verpackungselemente 9, 10 in der Nut 7 abgeschert und/oder beschädigt werden.

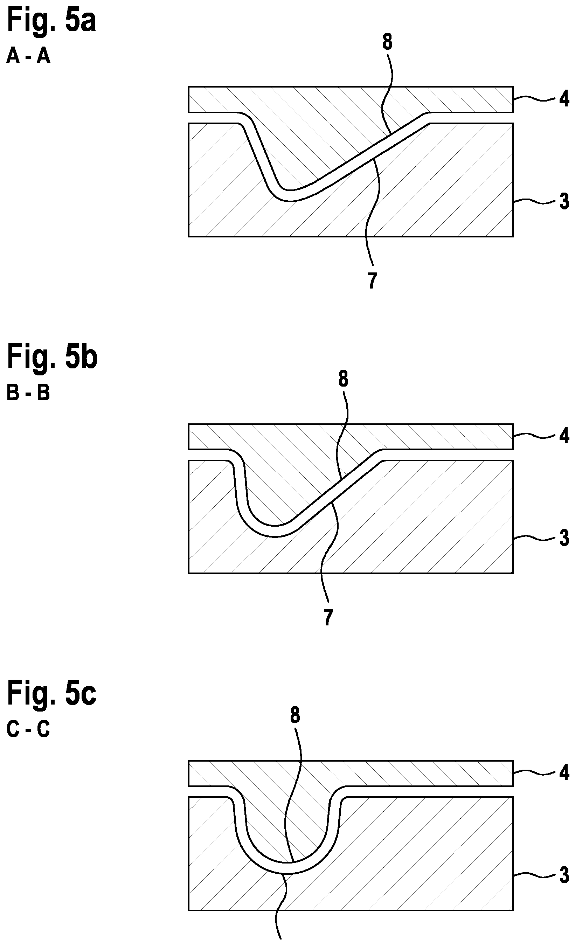

Die Fig. 4 und Fig. 5a bis 5c zeigen eine Siegelstation, die nicht unter den Gegenstand des Schutzbegehrens fällt.

Die Fig. 4 und die Fig. 5a bis 5c sind gegenüber der Fig. 2 und der Fig. 3 weiter schematisiert. Die in den Fig. 4 und Fig. 5a bis 5c dargestellten Merkmale können beliebig mit weiteren Merkmalen aus den anderen Figuren der Beschreibung kombiniert werden.

Gemäß der Fig. 4 sind übereinander dargestellt die beiden Siegelemente 3, 4 mit der Nut 7 und der Prägegeometrie 8, die jeweils eine geschlossene umlaufende Kontur um eine erste Aufnahme 12 bzw. eine zweite Aufnahme 13 herum ausbilden. Zu erkennen ist, dass die Form der Nut 7 und der Prägegeometrie 8 hier eine Öffnungslasche 23 vorgeben. Im Bereich der Öffnungslasche 23 sind die Nut 7 und die Prägegeometrie 8 derart ausgeformt, dass der Siegelbereich einer Verpackung, die mit der Siegelstation 1 verschlossen wurde, für einen Benutzer gut erreichbar ist. In der Darstellung gemäß Fig. 4 haben die Nut 7 und die Prägegeometrie 8 jeweils eine spitze Ecke, mit welchen die Öffnungslasche ausgebildet wird, während die Nut 7 und die Prägegeometrie 8 in anderen Bereichen abgerundet sind. Ein Benutzer, der die mit den Verpackungselementen ausgebildete Verpackung öffnen will, kann hier besonders gut Kraft auf die Siegelung ausüben, um zu beginnen die Verpackungselemente voneinander zu trennen.

Gegebenenfalls kann auch eine Querschnittsform der Nut 7 und der Prägegeometrie 8 im Bereich der Öffnungslasche 23 angepasst sein, um die Trennbarkeit, der miteinander gesiegelten Verpackungselemente im Bereich der Öffnungslasche 23 zu vereinfachen. In den Fig. 5a, 5b und 5c jeweils dargestellt sind beispielhafte Querschnitte durch die Nut 7 und die Prägegeometrie 8 an den in Fig. 4 dargestellten Querschnitten A-A, B-B und C-C. Dabei zeigt die Fig. 5a den Querschnitt A-A direkt an der Öffnungslasche 23, die Fig. 5c den Querschnitt C-C außerhalb des Bereichs der Öffnungslasche 23 sowie die Fig. 5b den Querschnitt B-B in einem Übergangsbereich zwischen A-A und C-C. Zu erkennen ist, dass die Querschnittsform der Nut 7 und der Prägegeometrie 8 im Bereich der Öffnungslasche 23 zu einer Außenseite hin abgeflacht sind. Hierdurch kann die Öffnenbarkeit der Verpackung bzw. die Trennbarkeit der Verpackungselemente im Bereich der Öffnungslasche verbessert werden, weil der Benutzer/Anwender hier mit geringem Kraftaufwand die Siegelung lösen kann.

Durch die Erfindung ist eine Faltenbildung in dem Verbindungsbereich 11 zumindest teilweise verhinderbar.

### Bezugszeichenliste

- 1: Siegelstation
- 2: Verpackungsmaschine
- 3: erstes Siegelelement
- 4: zweites Siegelelement
- 5: erste Siegelfläche
- 6: zweite Siegelfläche
- 7: Nut
- 8: Prägegeometrie
- 9: erstes Verpackungselement
- 10: zweites Verpackungselement
- 11: Verbindungsbereich
- 12: erste Aufnahme
- 13: zweite Aufnahme
- 14: erste Formung
- 15: zweite Formung
- 16: Freiraum
- 17: Spalt
- 18: erster ringförmiger Abschnitt
- 19: zweiter ringförmiger Abschnitt
- 20: Umformstation
- 21: Aufnahmekavität
- 22: Packgut
- 23: Öffnungslasche

## Patentansprüche

1. Siegelstation (1) zur Siegelung von Verpackungselementen (9) aus faserbasierten Packmaterialien für eine Verpackungsmaschine (2), zumindest aufweisend:
- ein erstes Siegelelement (3) mit einer ersten Siegelfläche (5), wobei die erste Siegelfläche (5) zumindest eine Nut (7) aufweist; und
- ein zweites Siegelelement (4) mit einer zweiten Siegelfläche (6), wobei die zweite Siegelfläche (6) zumindest eine Prägegeometrie (8) aufweist, die beim Siegeln eines ersten Verpackungselements (9) mit einem zweiten Verpackungselement (10) zumindest teilweise in die zumindest eine Nut (7) eingreift, sodass das erste Verpackungselement (9) und das zweite Verpackungselement (10) zur zumindest teilweisen Verhinderung einer Kanalbildung in einem Verbindungsbereich (11) umgeformt werden,
- wobei sich die zumindest eine Prägegeometrie (8) zumindest teilweise um eine zweite Aufnahme (13) des zweiten Siegelelements (4) für eine zweite Formung (15) des zweiten Verpackungselements (10) erstreckt,
- wobei die zumindest eine Nut (7) und die zumindest eine Prägegeometrie (8) derart ausgebildet sind, dass beim Siegeln in der zumindest einen Nut (7) zumindest ein Freiraum (16) für das erste Verpackungselement (9) und das zweite Verpackungselement (10) ausgebildet wird.

2. Siegelstation (1) nach Anspruch 1, wobei das erste Siegelelement (3) oder das zweite Siegelelement (4) zumindest teilweise beheizbar sind.

3. Siegelstation (1) nach einem der vorhergehenden Ansprüche, wobei sich die zumindest eine erste Nut (7) zumindest teilweise um eine erste Aufnahme (12) des ersten Siegelelements (3) für eine erste Formung (14) des ersten Verpackungselements (9) erstreckt.

4. Siegelstation (1) nach einem der vorhergehenden Ansprüche, wobei die zumindest eine Nut (7) eine umlaufende und geschlossene Kontur aufweist.

5. Siegelstation (1) nach einem der vorhergehenden Ansprüche, wobei die zumindest eine Nut (7) ringförmig ausgebildet ist.

6. Siegelstation (1) nach einem der vorhergehenden Ansprüche, wobei die zumindest eine Prägegeometrie (8) eine umlaufende und geschlossene Kontur aufweist.

7. Siegelstation (1) nach einem der vorhergehenden Ansprüche, wobei die zumindest eine Prägegeometrie (8) ringförmig ausgebildet ist.

8. Siegelstation (1) nach einem der vorhergehenden Ansprüche, wobei die erste Siegelfläche (5) an einem ersten ringförmigen Abschnitt (18) des ersten Siegelelements (3) ausgebildet ist.

9. Siegelstation (1) nach einem der vorhergehenden Ansprüche, wobei die zweite Siegelfläche (6) an einem zweiten ringförmigen Abschnitt (19) des zweiten Siegelelements (4) ausgebildet ist.

10. Siegelverfahren, aufweisend zumindest die folgenden Schritte:
a) Bereitstellen eines ersten Verpackungselements (9), das zumindest teilweise aus einem faserbasierten Packmaterial besteht;
b) Bereitstellen eines zweiten Verpackungselements (10); und
c) Siegeln des ersten Verpackungselements (9) mit dem zweiten Verpackungselement (10) mit einer Siegelstation (1) nach einem der vorhergehenden Ansprüche, sodass das erste Verpackungselement (9) und das zweite Verpackungselement (10) zur Verhinderung einer Kanalbildung in einem Verbindungsbereich (11) umgeformt werden.

11. Siegelverfahren nach Anspruch 10, wobei das in Schritt b) bereitgestellte zweite Verpackungselement (10) zumindest teilweise aus dem faserbasierten Packmaterial besteht.

12. Siegelverfahren nach Anspruch 10 oder 11, wobei das erste Verpackungselement (9) und das zweite Verpackungselement (10) mit einem Winkel von 80° bis 100° zu einer ersten Falte des ersten Verpackungselements (9) oder einer zweiten Falte des zweiten Verpackungselements (10) umgeformt werden.

## Claims

1. Sealing station (1) for sealing packaging elements (9) made of fiber-based packing materials for a packaging machine (2), comprising at least:
- a first sealing element (3) having a first sealing surface (5), wherein the first sealing surface (5) has at least one groove (7); and
- a second sealing element (4) having a second sealing surface (6), wherein the second sealing surface (6) has at least one embossing geometry (8) which, when a first packaging element (9) is sealed to a second packaging element (10), engages at least partially in the at least one groove (7), such that the first packaging element (9) and the second packaging element (10) are reshaped to at least partially prevent channel formation in a connection area (11),
- wherein the at least one embossing geometry (8) extends at least partially around a second receptacle (13) of the second sealing element (4) for a second forming (15) of the second packaging element (10),
- wherein the at least one groove (7) and the at least one embossing geometry (8) are designed such that, during sealing, at least one free space (16) is formed in the at least one groove (7) for the first packaging element (9) and the second packaging element (10).

2. Sealing station (1) according to claim 1, wherein the first sealing element (3) or the second sealing element (4) is at least partially heatable.

3. Sealing station (1) according to either of the preceding claims, wherein the at least one first groove (7) extends at least partially around a first receptacle (12) of the first sealing element (3) for a first forming (14) of the first packaging element (9).

4. Sealing station (1) according to any of the preceding claims, wherein the at least one groove (7) has a circumferential and closed contour.

5. Sealing station (1) according to any of the preceding claims, wherein the at least one groove (7) is ring-shaped.

6. Sealing station (1) according to any of the preceding claims, wherein the at least one embossing geometry (8) has a circumferential and closed contour.

7. Sealing station (1) according to any of the preceding claims, wherein the at least one embossing geometry (8) is ring-shaped.

8. Sealing station (1) according to any of the preceding claims, wherein the first sealing surface (5) is formed on a first ring-shaped portion (18) of the first sealing element (3).

9. Sealing station (1) according to any of the preceding claims, wherein the second sealing surface (6) is formed on a second ring-shaped portion (19) of the second sealing element (4).

10. Sealing method, comprising at least the following steps:
a) providing a first packaging element (9) which consists at least partially of a fiber-based packing material;
b) providing a second packaging element (10); and
c) sealing the first packaging element (9) to the second packaging element (10) with a sealing station (1) according to any of the preceding claims, such that the first packaging element (9) and the second packaging element (10) are reshaped to prevent channel formation in a connection area (11).

11. Sealing method according to claim 10, wherein the second packaging element (10) provided in step b) consists at least partially of the fiber-based packing material.

12. Sealing method according to claim 10 or 11, wherein the first packaging element (9) and the second packaging element (10) are reshaped at an angle of 80° to 100° to form a first fold of the first packaging element (9) or a second fold of the second packaging element (10).

## Revendications

1. Poste de scellement (1) pour le scellement d'éléments d'emballage (9) constitués de matériaux d'emballage à base de fibres pour une machine d'emballage (2), présentant au moins :
- un premier élément de scellement (3) comportant une première surface de scellement (5), dans lequel la première surface de scellement (5) présente au moins une rainure (7) ; et
- un second élément de scellement (4) comportant une seconde surface de scellement (6), dans lequel la seconde surface de scellement (6) présente au moins une géométrie de gaufrage (8) qui, lors du scellement d'un premier élément d'emballage (9) avec un second élément d'emballage (10), vient en prise au moins partiellement dans l'au moins une rainure (7), de sorte que le premier élément d'emballage (9) et le second élément d'emballage (10) sont déformés dans une zone de liaison (11) afin d'empêcher au moins partiellement une formation de canaux,
- dans lequel l'au moins une géométrie de gaufrage (8) s'étend au moins partiellement autour d'un second logement (13) du second élément de scellement (4) pour une seconde partie façonnée (15) du second élément d'emballage (10),
- dans lequel l'au moins une rainure (7) et l'au moins une géométrie de gaufrage (8) sont conçues de telle sorte que, lors du scellement, au moins un espace libre (16) pour le premier élément d'emballage (9) et le second élément d'emballage (10) est formé dans l'au moins une rainure (7).

2. Poste de scellement (1) selon la revendication 1, dans lequel le premier élément de scellement (3) ou le second élément de scellement (4) peut être chauffé au moins partiellement.

3. Poste de scellement (1) selon l'une des revendications précédentes, dans lequel l'au moins une première rainure (7) s'étend au moins partiellement autour d'un premier logement (12) du premier élément de scellement (3) pour une première partie façonnée (14) du premier élément d'emballage (9).

4. Poste de scellement (1) selon l'une des revendications précédentes, dans lequel l'au moins une rainure (7) présente un contour périphérique et fermé.

5. Poste de scellement (1) selon l'une des revendications précédentes, dans lequel l'au moins une rainure (7) est de forme annulaire.

6. Poste de scellement (1) selon l'une des revendications précédentes, dans lequel l'au moins une géométrie de gaufrage (8) présente un contour périphérique et fermé.

7. Poste de scellement (1) selon l'une des revendications précédentes, dans lequel l'au moins une géométrie de gaufrage (8) est de forme annulaire.

8. Poste de scellement (1) selon l'une des revendications précédentes, dans lequel la première surface de scellement (5) est formée sur une première section annulaire (18) du premier élément de scellement (3).

9. Poste de scellement (1) selon l'une des revendications précédentes, dans lequel la seconde surface de scellement (6) est formée sur une seconde section annulaire (19) du second élément de scellement (4).

10. Procédé de scellement, présentant au moins les étapes suivantes :
a) fourniture d'un premier élément d'emballage (9) qui est constitué au moins partiellement d'un matériau d'emballage à base de fibres ;
b) fourniture d'un second élément d'emballage (10) ; et
c) scellement du premier élément d'emballage (9) avec le second élément d'emballage (10) à l'aide d'un poste de scellement (1) selon l'une des revendications précédentes, de sorte que le premier élément d'emballage (9) et le second élément d'emballage (10) sont déformés dans une zone de liaison (11) afin d'empêcher une formation de canaux.

11. Procédé de scellement selon la revendication 10, dans lequel le second élément d'emballage (10) fourni à l'étape b) est constitué au moins partiellement du matériau d'emballage à base de fibres.

12. Procédé de scellement selon la revendication 10 ou 11, dans lequel le premier élément d'emballage (9) et le second élément d'emballage (10) sont déformés selon un angle allant de 80° à 100° par rapport à un premier pli du premier élément d'emballage (9) ou à un second pli du second élément d'emballage (10).
